# EUROPÄISCHE PATENTSCHRIFT

(11) **EP 1 695 046 B1**
(45) Veröffentlichungstag und Bekanntmachung des Hinweises auf die Patenterteilung: **12.10.2011**
(21) Anmeldenummer: 04804816.9
(22) Anmeldetag: 14.12.2004
(51) Int. Cl.: G01F 23/296

(54) **MESSVORRICHTUNG MIT MECHANISCH SCHWINGFÄHIGER EINHEIT SOWIE VERFAHREN UND VORRICHTUNG ZU DEREN HERSTELLUNG**
METHOD AND DEVICE FOR PRODUCING A MEASURING DEVICE FOR DETERMINING AND/OR MONITORING A PROCESS VARIABLE, AND CORRESPONDING MEASURING DEVICE
PROCEDE ET DISPOSITIF POUR PRODUIRE UN DISPOSITIF DE MESURE POUR DETERMINER ET/OU SURVEILLER UNE VARIABLE DE PROCESSUS ET DISPOSITIF DE MESURE CORRESPONDANT

(30) Priorität: 18.12.2003 DE 10359869; 22.01.2004 DE 102004003460
(43) Veröffentlichungstag der Anmeldung: 30.08.2006
(73) Patentinhaber: Endress + Hauser GmbH + Co. KG, 79689 Maulburg (DE)
(72) Erfinder: LOPATIN, Sergej, 79540 Lörrach (DE); LUTTERBECK, Burkhard, 79585 Steinen (DE)
(74) Vertreter: Andres, Angelika Maria
(86) Internationale Anmeldenummer: PCT/EP2004/053458
(87) Internationale Veröffentlichungsnummer: WO 2005/059475

(56) Entgegenhaltungen:
- EP-A- 0 949 489
- WO-A-2004/094964
- DE-A1- 10 318 445
- US-B1- 6 205 855

## Beschreibung

Die Erfindung bezieht sich auf ein Verfahren zur Herstellung einer Messvorrichtung zur Bestimmung und/oder Überwachung einer Prozessgröße eines Mediums in einem Behälter, mit einer mechanisch schwingfähigen Einheit, die über eine Einspannung an einem Sensor-Gehäuse und/oder an dem Behälter befestigbar ist, und mit einer Antriebs-/Empfangseinheit, die die mechanisch schwingfähige Einheit zu Schwingungen anregt, bzw. die Sdiwingungen der mechanisch schwingfähigen Einheit empfängt. Weiterhin bezieht sich die Erfindung auf eine Vorrichtung zur Herstellung einer solchen Messvorrichtung und auf eine Messvorrichtung selbst. Bei der Prozessgröße handelt es sich beispielsweise um den Füllstand, die Dichte oder die Viskosität des Mediums in dem Behälter. Bei der mechanisch schwingfähigen Einheit kann es sich beispielsweise um eine Schwinggabel oder um einen Einstab handeln.

Von der Anmelderin werden unter der Bezeichnung "Liquiphant" Füllstandsmessgeräte hergestellt und vertrieben. Diese Messgeräte weisen eine Schwinggabel mit zwei Zinken als mechanisch schwingfähige Einheit auf, die über eine Membran durch ein piezoelektrisches Element als Antriebs-/Empfangseinheit zu mechanischen Schwingungen angeregt werden. Dabei schwingen die beiden Gabelzinken gegensinnig zueinander. Kommt das Medium, dessen Füllstand überwacht werden soll, in Kontakt mit der schwingfähigen Einheit, so führt dies zu einer Änderung der Frequenz und/oder der Amplitude der Schwingungen. Somit lässt sich also das Erreichen eines Füllstands detektieren. Entsprechend ist es auch möglich, das Unterschreiten eines Füllstands zu bestimmen, d.h. wenn die Schwinggabel zunächst vom Medium bedeckt ist und dann der Pegel sinkt. Die Membran, an der die schwingfähige Einheit befestigt ist und über die sie zu Schwingungen angeregt wird, bzw. über die die Schwingungen empfangen werden, ist über eine Einspannung mit einem Gehäuse des Gerätes oder mit einer Behälterwand verbunden. Weiterhin ist üblicherweise in dem Messgerät noch eine Verstärkungseinheit vorgesehen, die die empfangenen Signale verstärkt und rückkoppelt.

Wichtig bei den Schwinggabeln, aber auch bei allen sonstigen mechanisch schwingfähigen Einheiten, die in Feldgeräten/Messgeräten Anwendung finden, ist die Symmetrie der schwingfähigen Einheit. So muss bei der Schwinggabel gewährleistet sein, dass beide Zinken derartig gegensinnig schwingen, dass Reaktionskräfte und -momente, die auf die Einspannung wirken, möglichst minimal sind. Dafür ist es z.B. erforderlich, dass beide Zinken gleiche Massenträgheitsmomente, also auch gleiche Drehmomente aufweisen. Die schwingfähige Einheit ist also dann symmetrisch aufgebaut, wenn ihre Schwingungen nicht zu Reaktionskräften und -momenten an der Einspannung führen, wenn es also Teileinheiten der mechanisch schwingfähigen Einheit - z.B. die erwähnten Zinken der Gabel - gibt, deren Schwingungen derartig aufeinander abgestimmt sind, dass sich die Kräfte und Momente in der Einspannung gerade gegenseitig aufheben, so dass die verbleibenden Reaktionskräfte und -momente möglichst ausgeglichen sind, ist eine Unsymmetrie gegeben - ist also beispielsweise ein Zinken schwerer als der andere -, so kann nicht mehr gewährleistet werden, dass sich die auf die Einspannung wirkenden Kräfte und Momente kompensieren. Eine solche Kompensation ist u.a. wichtig, um zu verhindern, dass über die Einspannung Energie verloren geht. Ein Energieverlust führt dazu, dass die Schwingungsamplitude abnimmt. Weiterhin kann eine Asymmetrie dazu führen, dass die Schwingungsfrequenz zufallsbedingt zwischen zwei Werten wechselt, was die Messung verfälschen kann.

In der EP 0 949 489 A1 ist ein als "gefaltete Schwinggabel" bezeichnetes vibronisches Füllstandmessgerät beschrieben. Dieses besteht aus einem einseitig mit einem Verschlusselement geschlossenen Rohr, welches mit dem offenen Endbereich an einem Behälter befestigbar ist. In dem geschlossenen Endbereich ist ein Stab ausgebildet, welcher von dem Verschlusselement aus in das Innere des Rohres ragt und an seiner Spitze als Magnet ausgestaltet ist. Mittels eines ebenfalls in dem Rohr angeordneten Magneten werden der Stab und somit auch das Rohr zu Schwingungen angeregt. Die Folgen einer Asymmetrie des Rohres bei Korrosion oder Abrasion, sowie eine Erkennung einer solchen, sind nicht beschrieben.

In der Patentschrift US 6,205,855 B1 ist ein so genannter Einstab zur Füllstandsmessung in einem Behälter beschrieben, welcher die Auswirkungen einer Ansatz- oder Korrosionsbedingten Asymmetrie kompensiert. Dieser besteht im Wesentlichen aus einem schwingfähigen hohlen Stab, welcher einen weiteren Stab koaxial umschließt, und einer Antriebseinheit, welche die beiden Stäbe mit der Resonanzfrequenz zu gegensinnigen Schwingungen quer zu ihrer Längsachse anregt. Die Vorrichtung ragt im Betrieb in einen Behälter hinein und ist endseitig in eine Öffnung des Behälters eingespannt. Der innere und der äußere Stab sind zu Beginn derart aufeinander abgestimmt, dass auftretende Kräfte kompensiert werden. Um bei einer korrosions- oder abrasionbedingten Änderung der Resonanzfrequenz des äußeren Stabes einem Energieverlust durch Übertragung von Kräften auf die Einspannung vorzubeugen, weist der Einstab im Inneren mindestens eine verschiebbare Kompensationsmasse auf. Wird eine Änderung der Resonanzfrequenz des äußeren Stabes detektiert, wird die Kompensationsmasse so verschoben, dass die Schwingung des inneren Stabes die durch die Schwingung des äußeren Stabes hervorgerufenen Kräfte wieder kompensiert.

Eine Methode im Stande der Technik, die Symmetrie einer Schwinggabel zu messen, besteht darin, die Schwingfrequenz jedes Zinken einzeln zu bestimmen. Treten Unterschiede auf, die größer als ein vorgegebener Toleranzbereich sind, so wird z.B. das Gewicht oder die Steifigkeit der Zinken geändert, z.B. verkleinert. Dieses Messen der Frequenzen ist sehr aufwendig. Dies bezieht sich auf die Herstellung der Feldgeräte. In der Anwendung im Feld ist es vor allem kaum möglich, die Schwingfrequenzen der einzelnen Zinken zu bestimmen.

Der Erfindung liegt somit die Aufgabe zugrunde, Asymmetrien in mechanisch schwingfähigen Einheiten von Messgeräten zu erkennen.

Die Erfindung löst diese Aufgabe mit einem Verfahren und einer Vorrichtung zur Herstellung einer Messvorrichtung, so dass die schwingfähige Einheit der Messvorrichtung symmetrisch ist. Weiterhin löst die Erfindung die Aufgabe mit einem Messvorrichtung selbst, wodurch des möglich wird, die Symmetrie auch während der Anwendung der Messvorrichtung, also nach der Installation zu überwachen. Durch die Erfindung ist es zum einen möglich, eine Asymmetrie bei der Herstellung einer Messvorrichtung zu verhindern und zum anderen lässt sich durch die Erfindung die Symmetrie und damit verbunden die Messgenauigkeit während der Messungen überwachen.

Die Erfindung löst die Aufgabe hinsiditlich des Verfahrens zur Herstellung einer Messvorrichtung dadurch, dass die mechanisch schwingfähige Einheit zu Schwingungen angeregt wird, dass Reaktionskräfte und/oder Reaktionsmomente detektiert werden, welche durch die Sdiwingungen der mechanisch schwingfähigen Einheit auf die Einspannung wirken, dass eine Meldung ausgegeben wird, wenn die Reaktionskräfte und/oder Reaktionsmomente vorgebbare Grenzwerte übersteigen, und dass im Falle einer Meldung die mechanisch schwingfähige Einheit in ihren Eigenschaften in Bezug auf die Schwingungen verändert wird. Die Idee der Erfindung ist also, dass die Kräfte und Momente, die sich durch Asymmetrien ergeben, dazu benutzt werden, dass diese "Unausgeglichenheiten" der schwingfähigen Einheit - die "Unwucht" - bei der Fertigung ausglichen werden.

Durch Fertigungstoleranzen ist es immer möglich, dass die mechanisch schwingfähigen Einheiten nicht immer optimal ausgeglichen sind. Liegt diese "Unwucht" oberhalb eines bestimmten und vorgebbaren Bereiches, unterscheiden sich beispielsweise die Frequenzen mehr als ein vorgebbares Prozentsatz voneinander, so sind die Messungen nicht mehr genau und zuverlässig, bzw. sie können sogar unmöglich werden. Daher wird die Symmetrie kontrolliert, indem auftretende Kräfte und Momente detektiert werden, die aus einer Asymmetrie resultieren. Liegen diese Kräfte und/oder Momente über bestimmten Werten, so liegen entsprechende Unterschiede in den Bestandteilen der schwingfähigen Einheit - die Zinken bei der Gabel oder die einzelnen Schwingelemente beim Einstab - vor, die dadurch ausgeglichen werden, dass die schwingfähige Einheit bearbeitet wird. Es wird z.B. ein Zinken schwerer gemacht oder die Steifigkeit wird verändert usw. Die Grenzwerte sind so vorzugeben, dass keine Messfehler auftreten, dass sie aber auch im Rahmen einer üblichen Fertigungsmethode einzuhalten sind.

Die Erfindung löst die Aufgabe hinsichtlich der Vorrichtung zur Herstellung einer Messvorrichtung dadurch, dass eine Vorrichtung zum Einspannen der Messvorrichtung vorgesehen ist, und dass mindestens eine Kraftdetektionseinheit vorgesehen ist, die derartig mit der Einspannung gekoppelt ist, dass sie Reaktionskräfte und/oder Reaktionsmomente detektiert, die auf die Einspannung einwirken und die sich aus den Schwingungen der mechanisch schwingfähigen Einheit ergeben. Die mechanisch schwingfähige Einheit wird also ein eine geeignete Vorrichtung eingespannt. Dadurch entstehen beispielsweise keine Effekte aus einer ungünstigen Positionierung der Messvorrichtung. Weiterhin kann so auch der Einfluss von Fremdvibrationen gesteuert werden. Anschließend werden durch die Kraftdetektionseinheit Kräfte und/oder Momente gemessen, die aus einer Asymmetrie resultieren. Eine entsprechende Auswerteeinheit zur Auswertung der detektierten Kräfte und Momente der Kraftdetektionseinheit ist nahe liegend und dürfte der fachlich qualifizierten Person keine Schwierigkeiten bereiten.

Eine vorteilhafte Ausgestaltung beinhaltet, dass mindestens eine Kraftübertragungseinheit vorgesehen ist, die derartig mit der Einspannung und/oder mit dem Sensor-Gehäuse und mit der Kraftdetektionseinheit gekoppelt ist, dass die Kraftdetektionseinheit auf die Einspannung einwirkende Reaktionskräfte und/oder Reaktionsmomente über die Kraftübertragungseinheit detektiert. In dieser Ausgestaltung werden also die Reaktionskräfte und -momente, die aus der Schwingungsasymmetrie resultieren, über eine Kraftübertragungseinheit übertragen, so dass z.B. die Kraftdetektionseinheit weiter entfernt von der mechanisch schwingfähigen Einheit befindlich sein kann. Dies ist z.B. vorteilhaft bei der Herstellung der Messgeräte bzw. der mechanisch schwingfähigen Einheiten, da so die Symmetrie auch dann überprüft werden kann, wenn die schwingfähige Einheit geringere Dimensionen aufweisen, wenn also nicht ausreichend Platz vorhanden ist, um die Kraftdetektionseinheit direkt mit der schwingfähigen Einheit zu verbinden. Weiterhin dient die Kraftübertragungseinheit bei der Anwendung der Erfindung bei der Herstellung/Ausgangskontrolle der mechanisch schwingfähigen Einheit bzw. der Messvorrichtungen auch zur Einspannung der Messvorrichtung bei der Messung der Symmetrie.

Eine Ausgestaltung der Vorrichtung sieht vor, dass es sich bei der Kraftübertragungseinheit um einen Flansch handelt. Ein solcher Flansch ist relativ zur Messvorrichtung meist auch schwer genug, so dass die Vorrichtung sicher und fest eingespannt ist.

Die Erfindung löst die Aufgabe hinsichtlich der Messvorrichtung dadurch, dass mindestens eine Kraftdetektionseinheit vorgesehen ist, die derartig mit der Einspannung gekoppelt ist, dass sie Reaktionskräfte und/oder Reaktionsmomente detektiert, die auf die Einspannung einwirken und die sich aus den Schwingungen der mechanisch schwingfähigen Einheit ergeben. Die Idee besteht also darin, auszunutzen, dass durch Asymmetrien Kräfte und Momente von der schwingfähigen Einheit nach außen auf die Einspannung übertragen werden. In der Erfindung werden also die Folgen der Asymmetrie zu ihrer Erkennung ausgenutzt. Dabei ist die Kraftdetektionseinheit hier im Gegensatz zum obigen Verfahren und zur obigen Vorrichtung, die sich auch auf Messgeräte bzw. Messvorrichtung ohne ständige Überwachung der Symmetrie bezogen, ein fester Bestandteil der Messvorrichtung, um auch während der Anwendung der Messvorrichtung im Feld die Symmetrie der mechanisch schwingfähigen Einheit zu bestimmen oder zu überwachen. Im Einsatz der Messvorrichtung dient diese Kraftdetektionseinheit auch der *predictive maintenance.* Dadurch, dass die Symmetrie nach der Installation im Betrieb überwacht wird, wird permanent sichergestellt, dass die Qualität der Messungen nicht unter einer verminderten Symmetrie leidet. Bei der *advanced diagnostics* kann somit auch durch die Auswertung des zeitlichen Verhaltens der Symmetrie im voraus bestimmt werden, ob und wann ein Austausch - bei Korrosion oder Abrasion als Ursache der verminderten Symmetrie - oder eine Reinigung - bei Ansatz - der schwingfähigen Einheit ansteht. Für die Bestimmung der Symmetrie sind auch Toleranzen vorzugeben. Dies bezieht sich auf die Fertigung, aber auch auf die Anwendung im Feld. Ein Problem besteht darin, dass sich auch Kräfte und Momente durch Schwingungen der Umgebung ergeben, dass z.B. durch Rührwerke die Behälterwand vibriert. Die Kräfte und Momente aus diesen Bewegungen müssen gegen die Reaktionskräfte und -momente abgegrenzt werden, z.B. durch eine Frequenzanalyse oder durch Vergleich mit den Schwingungen der schwingfähigen Einheit.

Eine Ausgestaltung sieht vor, dass die Kraftdetektionseinheit derartig angeordnet ist, dass sie Reaktionskräfte und/oder Reaktionsmomente längs einer Achse detektiert, die im Wesentlichen mit der Schwingungsachse der mechanisch schwingfähigen Einheit zusammenfällt. Durch diese Anordnung ergibt sich eine sehr große Empfindlichkeit, wodurch die Symmetrie genauer und besser bestimmt werden kann. Ursache dafür ist, dass bei Abweichungen von der Symmetrie die Energie bevorzugt in Richtung der Schwingungsachse auf die Einspannung übertragen wird. Allgemein sollte die Kraftdetektionseinheit derartig relativ zur mechanisch schwingfähigen Einheit angeordnet sein, dass die Empfindlichkeit möglichst hoch ist.

Eine Ausgestaltung beinhaltet, dass es sich bei der Kraftdetektionseinheit um einen Beschleunigungssensor handelt. Es sollte dabei ein möglichst empfindlicher Sensor benutzt werden.

Eine Ausgestaltung sieht vor, dass es sich bei der mechanisch schwingfähigen Einheit um eine Schwinggabel handelt. Solche werden von der Anmelderin unter den Bezeichnungen "Liquiphant" und "Soliphant" hergestellt und vertrieben.

Eine Ausgestaltung sieht vor, dass es sich bei der mechanisch schwingfähigen Einheit um einen Einstab handelt. Einstäbe haben beispielsweise den Vorteil, dass so der Kontakt mit dem Medium verringert ist und dass das Problem der Gabeln v ermieden wird, dass sich Materialien zwischen den Zinken verklemmen.

Eine weitere Ausgestaltung beinhaltet, dass es sich bei der mechanisch schwingfähigen Einheit um einen Einstab mit drei Schwingkörpern handelt, und dass mindestens ein Schwingkörper an einem Verbindungsbereich mit der Einspannung verbunden ist. Siehe hierzu die Anmeldung zum Patent der Anmelderin beim Deutschen Patent- und Markenamt und der Nummer 103 31 730.9. Solche Einstäbe haben in der Anwendung Schwierigkeiten mit Ansatz, der üblicherweise asymmetrisch ist, und mit Korrosion, die ebenfalls meist asymmetrisch auftritt. In der Anwendung der Messvorrichtungen kann es also bei Einstäben dazu kommen, dass die Symmetrie der mechanisch schwingfähigen Einheit durch den Prozess, bzw. durch das Medium aufgehoben wird.

Die Erfindung wird anhand der nachfolgenden Zeichnungen näher erläutert.

Es zeigt:

Fig. 1: eine schematische Darstellung einer Schwinggabel

als Messvorrichtung gemäß dem Stand der Technik,

Fig. 2: einen Schnitt durch eine erfindungsgemäße

Vorrichtung zur Herstellung einer Messvorrichtung,

Fig. 3: eine Sicht von oben auf die Umsetzung der Fig. 2, und

Fig. 4: eine schematische Darstellung einer erfindungsgemäßen

Messvorrichtung eines zweiten Typs - hier ein Einstab im

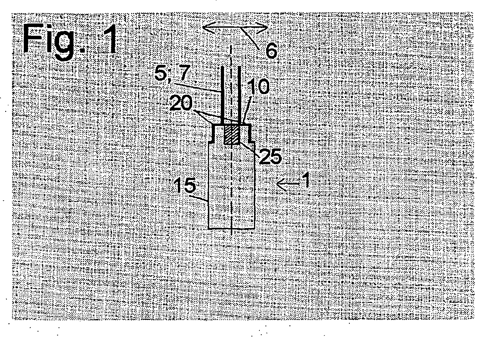

Gegensatz zur Schwinggabel in den Figuren 1 bis 3 -

im Betrieb.

Fig. 1 zeigt die Messvorrichtung 1. Es besteht aus einem Sensorgehäuse 15, in welchem sich die Antriebs-/Empfangseinheit 25 - z.B. eine piezo-elektrische Einheit - befindet. Diese Antriebs-/Empfangseinheit 25 regt über die Membran 10, die über die Einspannung 20 am Gehäuse 15 befestigt ist, die mechanisch schwingfähige Einheit 5, die hier eine Schwinggabel 7 ist, zu Schwingungen an, bzw. detektiert deren Schwingungen. Die beiden Zinken der Schwinggabel 7 schwingen entlang der Schwingungsachse 6 gegensinnig zueinander. Weisen beide Zinken gleiche Trägheitsmomente auf oder sind sie allgemein symmetrisch zueinander, so kompensieren sich die einzelnen Kräfte und Momente, die durch die Schwingungen an der Einspannung 20 der Membran 10 am Gehäuse 15 auftreten. Unterscheiden sich die Zinken - ist die mechanisch schwingfähige Einheit 5 also asymmetrisch -, so treten verbleibende Reaktionskräfte und -momente an der Einspannung 20 auf. Dadurch kann Schwingungsenergie verloren gehen, was sich auch in einer verminderten Empfindlichkeit der Messvorrichtung 1 äußert. Der Verlust an Schwingungsenergie hängt u.a. davon ab, wie fest die Messvorrichtung 1 am Gehäuse 15 befestigt ist und ob Behälterteile - graphisch nicht dargestellt - mitschwingen. Ein stärkeres Problem als der Energieverlust stellt der Fall dar, dass die Schwingfrequenz aufgrund einer Asymmetrie zufällig zwischen zwei Werte hin- und herspringt. In diesem Fall schwingt nur eine Zinke und die andere ist in Ruhe. Dies kann beispielsweise auftreten, wenn eine Schwinggabel eine Asymmetrie größer als 4-5% in den Frequenzen der beiden Zinken aufweist und die Messvorrichtung in einem massiven Flansch befestigt ist.

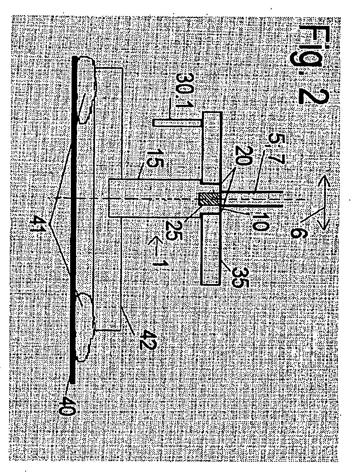

In der Fig. 2 ist das Gehäuse 15 der Messvorrichtung 1 durch das Eigengewicht der Kraftübertragungseinheit 35 eingespannt zwischen einer Auflage 42 und der Kraftübertragungseinheit 35, die beispielsweise ein Flansch ist. Die Messvorrichtung 1 muss möglichst stabil festgehalten werden, so dass nur die aus einer Asymmetrie der mechanisch schwingfähigen Einheit 5 resultierenden Reaktionskräfte und -momente gemessen werden und keine Kräfte, die z.B. auf eine instabile Positionierung der Messvorrichtung 1 zurückgehen. Für diesen Zweck ruht auch die Auflage 42 über Dämpfungskissen 41 auf einem Untergrund 40. Somit können umgekehrt keine äußeren Kräfte während der Symmetrie-Messung auf die Messvorriditung 1 wirken. Die Schwinggabel 7 schwingt im hier dargestellten Fall längs der Schwingungsachse 6. Sind die beiden Zinken nicht symmetrisch zueinander, so werden Reaktionskräfte und Momente auf die Einspannung 20 und über die Kraftübertragungseinheit 35 auf die Kraftdetektionseinheit 30.1 übertragen. Bei der Kraftdetektionseinheit 30.1 handelt es sich beispielsweise um einen Beschleunigungssensor. Der in dieser Fig. 2 dargestellte Fall bezieht sich also auf die Fertigung der Messvorrichtungen 1, bei welcher die Symmetrie einfach und sicher überprüft werden kann.

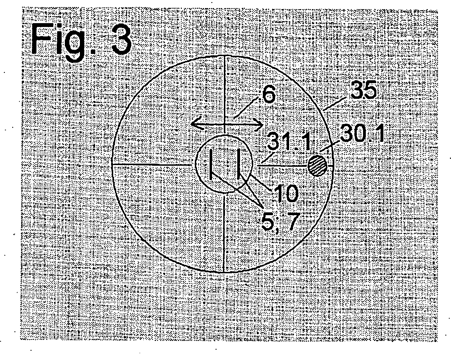

In der Fig. 3 ist eine Draufsicht auf den Aufbau in Fig. 2 dargestellt. Zu sehen ist die Kraftübertragungseinheit 35 mit der Membran 10 und der mechanisch schwingfähigen Einheit 5 in der Mitte. Die Schwinggabel 7 schwingt längs der Achse 6. In dieser Richtung befindet sich auch die Detektionsachse 31.1 der Kraftdetektionseinheit 30.1, die somit die optimale Empfindlichkeit für die Messung der Symmetrie aufweist. Wird eine zusätzliche, zweite Kraftdetektionseinheit - nicht dargestellt - verwendet, so kann auch detektiert werden, welcher Zinken leichter, welcher schwerer ist.

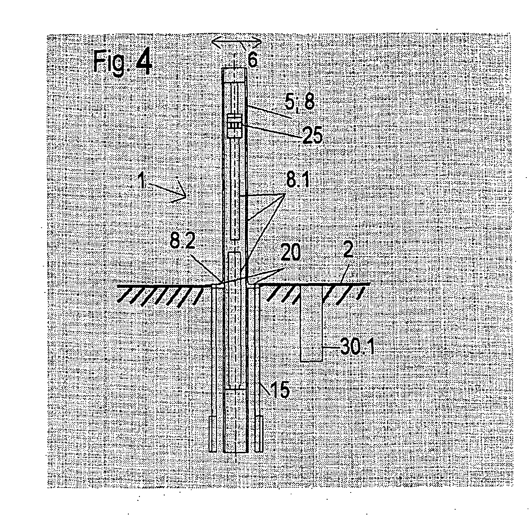

Die Figuren Fig. 2 und 3 zeigen den Fall, dass die Erfindung bei der Herstellung der Messvorrichtung eingesetzt wird. In der Figur 4 wird eine Messvorrichtung dargestellt, in welcher während des Betriebes die Symmetrie überwacht wird. Durch die Erfindung kommt also eine Sicherheitskomponente hinzu, die zuverlässige Messwerte gewährleistet bzw. die eine Vorhersage über den Zustand der Messvorrichtung erlaubt.

Fig. 4 zeigt einen Einstab 8 als mechanisch schwingfähige Einheit 5 einer Messvorrichtung 1. Diese Messvorrichtung 1 lässt sich also mit dem erfindungsgemäßen Verfahren und der erfindungsgemäßen Vorrichtung herstellen, sie zeichnet sich aber darüber hinaus dadurch aus, dass sie auch während des Betriebes hinsichtlich der Symmetrie überwacht wird. Dieser Einstab 8 besteht aus drei Schwingkörper 8.1, wobei die inneren Schwingkörper jeweils gegensinnig schwingen. Im Verbindungsbereich 8.2 befindet sich die Einspannung 20, mit der in diesem Fall die Messvorrichtung 1 mit dem Behälter 2 verbunden ist, in welchem sich das zu messende oder zu überwachende Medium - nicht dargestellt - befindet. Hier wird die Erfindung also bei einer Anwendung der Messvorrichtung 1 im Feld umgesetzt. Bildet sich durch das Medium Ansatz am Einstab 8 oder ist das Medium korrosiv oder abrasiv, so sind die drei Schwingkörper 8.1 und die Lage des Verbindungsbereichs 8.2 nicht mehr optimal aufeinander abgestimmt und es wird Energie an den Behälter 2 übertragen. Dies wird durch die Kraftdetektionseinheit 30.1 detektiert. Je nach Ausgestaltung der Kraftdetektionseinheit 30.1 können bereits sehr kleine Abweichungen von der Symmetrie der mechanisch schwingfähigen Einheit 5 detektiert werden. Dadurch kann beispielsweise für besondere Medien die Empfindlichkeit der Messvorrichtung 1 konstant und sehr hoch gehalten werden, indem z.B. Ansatz und der damit einhergehende Empfindlichkeitsverlust bereits sehr früh erkannt wird. Dafür kann z.B. eine Auswertung der zeitlichen Entwicklung der Signale der Kraftdetektionseinheit 35 erforderlich sein, um z.B. das Anwachsen eines Ansatzes oder den Verlust durdi Abrasion oder Korrosion zu bestimmen.

## Patentansprüche

1. Verfahren zur Herstellung einer Messvorrichtung (1) zur Bestimmung und/oder Überwachung einer Prozessgröße eines Mediums in einem Behälter (2), mit einer mechanisch schwingfähigen Einheit (5), die über eine Einspannung (20) an einem Sensor-Gehäuse (15) und/oder an dem Behälter (2) befestigbar ist, und mit einer Antriebs-/Empfangseinheit (25), die die mechanisch schwingfähige Einheit (5) zu Schwingungen anregt, bzw. die Schwingungen der mechanisch schwingfähigen Einheit (5) empfängt, **dadurch gekennzeichnet, dass** die mechanisch schwingfähige Einheit (5) zu Schwingungen angeregt wird, dass Reaktionskräfte und/oder Reaktionsmomente detektiert werden, welche durch die Schwingungen der mechanisch schwingfähigen Einheit (5) auf die Einspannung (20) wirken, dass eine Meldung ausgegeben wird, wenn die Reaktionskräfte und/oder Reaktionsmomente vorgebbare Grenzwerte übersteigen, und dass im Falle einer Meldung die mechanisch schwingfähige Einheit (5) in ihren Schwingungseigenschaften verändert wird.

2. Vorrichtung zur Herstellung einer Messvorrichtung (1) nach dem Verfahren in Anspruch 1, **dadurch gekennzeichnet, dass** eine Vorrichtung (35, 42) zum Einspannen der Messvorrichtung (1) vorgesehen ist, und dass mindestens eine Kraftdetektionseinheit (30.1) vorgesehen ist, die derartig mit der Einspannung (20) gekoppelt ist, dass sie Reaktionskräfte und/oder Reaktionsmomente detektiert, die auf die Einspannung (20) einwirken und die sich aus den Schwingungen der mechanisch schwingfähigen Einheit (5) ergeben.

3. Vorrichtung nach Anspruch 2, **dadurch gekennzeichnet, dass** mindestens eine Kraftübertragungseinheit (35) vorgesehen ist, die derartig mit der Einspannung (20) und/oder mit dem Sensor-Gehäuse (15) und mit der Kraftdetektionseinheit (30.1) gekoppelt ist, dass die Kraftdetektionseinheit (30.1) auf die Einspannung (20) einwirkende Reaktionskräfte und/oder Reaktionsmomente über die Kraftübertragungseinheit (35) detektiert.

4. Vorrichtung nach Anspruch 3, **dadurch gekennzeichnet, dass** es sich bei der Kraftübertragungseinheit (35) um einen Flansch handelt.

5. Messvorrichtung (1) zur Bestimmung und/oder Überwachung einer Prozessgröße eines Mediums in einem Behälter (2),
mit einer mechanisch schwingfähigen Einheit (5), mit einer Einspannung (20), über welche die mechanisch schwingfähige Einheit (5) an einem Sensor-Gehäuse (15) und/oder an dem Behälter (2) befestigbar ist,
und
mit einer Antriebs-/Empfangseinheit (25), die die mechanisch schwingfähige Einheit (5) zu Schwingungen anregt, bzw. die Schwingungen der mechanisch schwingfähigen Einheit (5) empfängt,
**dadurch gekennzeichnet,**
**dass** mindestens eine Kraftdetektionseinheit (30.1) als fester Bestandteil der Messvorrichtung (1) vorgesehen ist, die derartig mit der Einspannung (20) gekoppelt ist, dass sie Reaktionskräfte und/oder Reaktionsmomente detektiert, die auf die Einspannung (20) einwirken und die sich aus den Schwingungen der mechanisch schwingfähigen Einheit (5) ergeben.

6. Messvorrichtung (1) nach Anspruch 5, **dadurch gekennzeichnet, dass** die Kraftdetektionseinheit (30.1) derartig angeordnet ist, dass sie Reaktionskräfte und/oder Reaktionsmomente längs einer Achse (31.1) detektiert, die im Wesentlichen mit der Schwingungsachse (6) der mechanisch schwingfähigen Einheit (5) zusammenfällt.

7. Messvorrichtung (1) nach Anspruch 5, **dadurch gekennzeichnet, dass** es sich bei der Kraftdetektionseinheit (30.1) um einen Beschleunigungssensor handelt.

8. Messvorrichtung (1) nach Anspruch 5, **dadurch gekennzeichnet, dass** es sich bei der mechanisch schwingfähigen Einheit (5) um eine Schwinggabel (7) handelt.

9. Messvorrichtung (1) nach Anspruch 5, **dadurch gekennzeichnet, dass** es sich bei der mechanisch schwingfähigen Einheit (5) um einen Einstab (8) handelt.

10. Messvorrichtung (1) nach Anspruch 9, **dadurch gekennzeichnet, dass** es sich bei der mechanisch schwingfähigen Einheit um einen Einstab (8) mit drei Schwingkörper (8.1) handelt, und dass mindestens ein Schwingkörper (8.1) an einem Verbindungsbereich (8.2) mit der Einspannung (20) verbunden ist.

## Claims

1. Method for producing a measuring apparatus (1) for determining and/or monitoring a process variable of a medium in a container (2), with a unit (5) capable of oscillating mechanically, which can be secured to a sensor housing (15) and/or the container (2) via a clamp (20), and with a drive/receptor unit (25) which causes the unit (5) capable of oscillating mechanically to oscillate, and which receives the oscillations of the unit (5) capable of oscillating mechanically, **characterized in that** the unit (5) capable of oscillating mechanically is caused to oscillate, **in that** reaction forces and/or reaction torques are detected which act on the clamp (20) as a result of the oscillations of the unit (5) capable of oscillating mechanically, **in that** a message is output if the reaction forces and/or reaction torques exceed predefined limit values, and **in that** the unit (5) capable of oscillating mechanically is changed in terms of its oscillation properties when a message is issued.

2. Unit for producing a measuring apparatus (1) as claimed in Claim 1, **characterized in that** a unit (35, 42) is provided to clamp the measuring apparatus (1), and **in that** at least one force detector (30.1) is provided which is coupled to the clamp (20) in such a way that it detects reaction forces and/or reaction torques that act on the clamp (20) and are caused by the oscillations of the unit (5) capable of oscillating mechanically.

3. Apparatus as claimed in Claim 2, **characterized in that** at least one power transmission unit (35) is provided that is coupled to the clamp (20) and/or the sensor housing (15) and with the force detector (30.1) in such a way that the force detector (30.1) detects - via the power transmission unit (35) - the reaction forces and/or reaction torques acting on the clamp (20).

4. Apparatus as claimed in Claim 3, **characterized in that** the power transmission unit (35) is a flange.

5. Measuring apparatus (1) for determining and/or monitoring a process variable of a medium in a container (2),
with a unit (5) capable of oscillating mechanically, with a clamp (20) via which the unit (5) capable of oscillating mechanically can be secured to a sensor housing (15) and/or the container (2),
and
with a drive/receptor unit (25) which causes the unit (5) capable of oscillating mechanically to oscillate and/or and which receives the oscillations of the unit (5) capable of oscillating mechanically,
**characterized in that**
at least one force detector (30.1) is provided as a fixed part of the measuring apparatus (1), which is coupled to the clamp (20) in such a way that it detects reaction forces and/or reaction torques that act on the clamp (20) and are caused by the oscillations of the unit (5) capable of oscillating mechanically.

6. Measuring apparatus (1) as claimed in Claim 5, **characterized in that** the force detector (30.1) is arranged in such a way that it detects reaction forces and/or reaction torques along an axis (31.1) which primarily coincides with the oscillation axis (6) of the unit (5) capable of oscillating mechanically.

7. Measuring apparatus (1) as claimed in Claim 5, **characterized in that** the force detector (30.1) is an acceleration sensor.

8. Measuring apparatus (1) as claimed in Claim 5, **characterized in that** the unit (5) capable of oscillating mechanically is a tuning fork (7).

9. Measuring apparatus (1) as claimed in Claim 5, **characterized in that** the unit (5) capable of oscillating mechanically is a single rod (8).

10. Measuring apparatus (1) as claimed in Claim 9, **characterized in that** the unit capable of oscillating mechanically is a single rod (8) with three oscillating bodies (8.1) and **in that** at least one oscillating body (8.1) is connected to the clamp (20) at one connection area (8.2).

## Revendications

1. Procédé destiné à la fabrication d'un dispositif de mesure (1) destiné à la détermination et/ou la surveillance d'une grandeur process d'un produit dans un réservoir (2), avec une unité mécanique apte à vibrer (5), laquelle peut être fixée par l'intermédiaire d'un dispositif de serrage (20) à un boîtier de capteur (15) et/ou au réservoir (2), et avec une unité d'entraînement / de réception (25), qui excite l'unité mécanique apte à vibrer (5) en vibrations, ou qui reçoit les vibrations de l'unité mécanique apte à vibrer (5), **caractérisé en ce que** l'unité mécanique apte à vibrer (5) est excitée en vibrations, que sont détectés les forces de réaction et/ou moments de réaction, qui agissent par l'intermédiaire des vibrations de l'unité mécanique apte à vibrer (5) sur le dispositif de serrage (20), de telle manière que soit délivré un message lorsque les forces de réaction et/ou les moments de réaction dépassent des valeurs limites prédéfinissables, et de telle manière qu'en présence d'un message, les caractéristiques de vibration de l'unité mécanique apte à vibrer (5) sont modifiées.

2. Dispositif destiné à la fabrication d'un dispositif de mesure (1) d'après le procédé évoqué dans la revendication 1, **caractérisé en ce qu'**est prévu un dispositif (35, 42) destiné au serrage du dispositif de mesure (1), et **en ce qu'**est prévue au minimum une unité de détection de forces 30.1, qui est couplée avec le dispositif de serrage (20) de telle manière à ce qu'elle détecte les forces de réaction et/ou les moments de réaction, qui agissent sur le dispositif de serrage (20) et qui résultent des vibrations de l'unité mécanique apte à vibrer (5).

3. Dispositif selon la revendication 2, **caractérisé en ce qu'**est prévue au minimum une unité de transmission de forces (35), qui est couplée avec le dispositif de serrage (20) et/ou avec le boîtier de capteur (15) et avec l'unité de détection de forces (30.1) de telle manière que l'unité de détection de forces (30.1) détecte les forces de réaction et/ou les moments de réaction, qui agissent sur le dispositif de serrage (20) par l'intermédiaire de l'unité de transmission de forces (35).

4. Dispositif selon la revendication 3, **caractérisé en ce que**, concernant l'unité de transmission de forces (35), il s'agit d'une bride.

5. Dispositif de mesure (1) destiné à la détermination et/ou la surveillance d'une grandeur process d'un produit dans un réservoir (2),
avec une unité mécanique apte à vibrer (5), avec un dispositif de serrage (20), par l'intermédiaire duquel l'unité mécanique apte à vibrer (5) peut être fixée sur un boîtier de capteur (15) et/ou sur le réservoir (2),
et
avec une unité d'entraînement / de réception (25), qui excite l'unité mécanique apte à vibrer (5) en vibrations, ou qui reçoit les vibrations de l'unité mécanique apte à vibrer (5), **caractérisé en ce**
**qu'**est prévue au minimum une unité de détection de forces (30.1) en tant que partie intégrante fixe du dispositif de mesure (1), laquelle est couplée avec le dispositif de serrage (20) de telle manière à ce que sont détectés les forces de réaction et/ou les moments de réaction, qui agissent sur le dispositif de serrage (20) et qui résultent des vibrations de l'unité mécanique apte à vibrer (5).

6. Dispositif de mesure (1) selon la revendication 5, **caractérisé en ce que** l'unité de détection de forces (30.1) est disposée de telle manière que les forces de réaction et/ou les moments de réaction sont détectés le long d'un axe (31.1), qui coïncide pour l'essentiel avec l'axe de vibration (6) de l'unité mécanique apte à vibrer (5).

7. Dispositif de mesure (1) selon la revendication 5, **caractérisé en ce que**, concernant l'unité de détection de forces (30.1), il s'agit d'un capteur d'accélération.

8. Dispositif de mesure (1) selon la revendication 5, **caractérisé en ce que,** concernant l'unité mécanique apte à vibrer (5), il s'agit d'une fourchette vibrante (7).

9. Dispositif de mesure (1) selon la revendication 5, **caractérisé en ce que,** concernant l'unité mécanique apte à vibrer (5), il s'agit d'une tige unique (8).

10. Dispositif de mesure (1) selon la revendication 9, **caractérisé en ce que,** concernant l'unité mécanique apte à vibrer (5), il s'agit d'une tige unique (8) comprenant trois corps vibrants (8.1), et qu'au minimum un corps vibrant (8.1) est relié avec le dispositif de serrage (20) au niveau d'une zone de liaison (8.2).
